# EUROPÄISCHE PATENTSCHRIFT

(11) **EP 1 687 164 B1**
(45) Veröffentlichungstag und Bekanntmachung des Hinweises auf die Patenterteilung: **14.01.2009**
(21) Anmeldenummer: 04741296.0
(22) Anmeldetag: 28.07.2004
(51) Int. Cl.: B60J 5/04, E05B 65/12

(54) **AGGREGATETRÄGER MIT INTEGRIERTER SCHLOSSBEFESTIGUNG FÜR EINE KRAFTFAHRZEUGTÜR**
UNIT CARRIER COMPRISING AN INTEGRATED LOCK FIXING SYSTEM FOR A MOTOR VEHICLE DOOR
SUPPORT D'UNITE COMPORTANT UN SYSTEME DE FIXATION DE SERRURE INTEGRE DESTINE A UNE PORTIERE DE VEHICULE

(30) Priorität: 14.11.2003 DE 20317708 U
(43) Veröffentlichungstag der Anmeldung: 09.08.2006
(73) Patentinhaber: Integración De Montajes Y Plásticos, S.L., 20130 Urnieta, Guipuzcoa (ES)
(72) Erfinder: KREITZ, Thomas, 42719 Solingen (DE); ALMEIDA, Pedro, 49080 Osnabrück (DE)
(74) Vertreter: Meyer, Hans-Joachim
(86) Internationale Anmeldenummer: PCT/EP2004/008427
(87) Internationale Veröffentlichungsnummer: WO 2005/051695

(56) Entgegenhaltungen:
- DE-A- 19 644 155
- US-A- 5 101 597
- US-A- 5 308 129

## Beschreibung

Die Erfindung betrifft einen Aggregateträger für eine Kraftfahrzeugtür, mit mindestens einem Befestigungsabschnitt für ein Türschloss und Befestigungsstellen zur Befestigung des Aggregateträgers an einer Kraftfahrzeugtür, wobei das Türschloss über einen Schlosshaltewinkel mit dem Aggregateträger verbindbar ist.

Ein derartiger Aggregateträger umfasst mindestens einen Befestigungsabschnitt für ein Türschloss und mehrere Befestigungsstellen zur Befestigung des Aggregateträgers an einer Kraftfahrzeugtür, wobei das Türschloss über einen Schlosshaltewinkel für Montage- und Transportzwecke mit dem Aggregateträger vormontierbar ist. Ein solcher Aggregateträger wird auch als Türmodulträger bezeichnet und dient der Halterung verschiedener Funktionskomponenten einer Kraftfahrzeugtür, wie z.B. eines Fensterhebers, eines Türschlosses, eines Seitenairbags, von Lautsprechern usw. Die Funktionskomponenten können an dem jeweiligen Aggregateträger vormontiert werden, wobei der Aggregateträger dann ein komplett vorgefertigtes Türmodul bildet, das in eine Kraftfahrzeugtür eingesetzt wird. Hierzu wird der Aggregateträger zusammen mit den daran befestigten Funktionskomponenten an der Fahrzeugtür, und zwar üblicherweise an dem Türinnenblech befestigt.

Die Befestigung des Türschlosses am Aggregateträger erfolgt unter Verwendung eines Schlosshaltewinkels, der an dem Aggregateträger befestigt wird. Nach der Vorpositionierung des Türschlosses für den späteren Einbau in die Kraftfahrzeugtür wird das Schloss mittels Schrauben, die durch Öffnungen im Türrohbau geführt und mit im Gehäuse des Schlosses ausgebildeten Gewindebohrungen verschraubt werden, endpositioniert.

Die Verbindung des Schlosses mit dem Schlosshaltewinkel zur Vorpositionierung des Schlosses erfolgt üblicherweise durch ein Vernieten von miteinander fluchtenden Bohrungen im Schlosshaltewinkel und Schloss. Neben dem zusätzlichen Arbeitsgang des Vernietens von Schloss und Schlosshaltewinkel zur Vorpositionierung des Schlosses sind somit zusätzliche Befestigungsteile in Form von Nieten erforderlich. Ein Lösen dieser Nietverbindung ist nur möglich, wenn die Nieten ausgebohrt werden. Sowohl das Vernieten zur Vorpositionierung des Schlosses am Schlosshaltewinkel als auch ein eventuelles Lösen der Verbindung zwischen dem Schlosshaltewinkel und dem Schloss ist arbeits- und kostenintensiv. Darüber hinaus können beim Lösen durch Ausbohren der Nieten Schäden am Schloss bzw. am Schlosshaltewinkel auftreten.

Zur Überwindung dieser Nachteile wurde bereits eine Vorrichtung vorgeschlagen, bei der eine Rastverbindung zwischen Türschloss und Schlosshaltewinkel vorgesehen ist (vgl. DE 201 11 158 U1). Bei dieser bekannten Vorrichtung ist der Schlosshaltewinkel über Bohrungen mit einer Aggregateträgerplatte in der Kraftfahrzeugtür mittels einer Niet- oder Schraubverbindung verbunden.

Aus der US 5,308,129 ist ein Aggregateträger für eine Kraftfahrzeugtür bekannt, der aus Metallblech gepresst ist und an dem ein Schlosshaltewinkel befestigbar ist. Der Aggregateträger weist eine längliche Ausnehmung auf, die zwei vergrößerte Öffnungsbereiche umfasst. An einer Wand des Schlosshaltewinkels sind zwei klauenförmige Zinken angeformt, die in besagte Öffnungsbereiche des Aggregateträgers einsteckbar sind und durch eine Verschiebung des Schlosshaltewinkels nach rechts den Aggregateträger formschlüssig umgreifen.

Die US 5,101,597 offenbart einen gabelförmigen Handhebelträger mit einem daran schwenkbar gelagerten Handhebel zur Befestigung an einem plattenförmigen Innenelement einer Fahrzeugtür. Das plattenförmige Innenelement besteht aus Metallblech und weist zwei durch Stanzen erzeugte Fußbügel auf, die Einstecköffnungen definieren, in welche die Enden zungenförmiger Einsteckelemente des gabelförmigen Handhebelträgers einsteckbar sind. Des weiteren sind in dem Türinnenelement zwei rechteckige Öffnungen ausgestanzt, die der Aufnahme und Befestigung von klammerartigen Halteabschnitten des Handhebelträgers dienen. Zwischen den rechteckigen Öffnungen und den Fußbügeln sind zwei weitere Öffnungen zur Aufnahme von federelastischen Vorsprünge ausgestanzt, die an den Unterseiten der zungenförmiger Einsteckelemente vorstehen. Im montierten Zustand umgreift der jeweilige klammerartige Halteabschnitt des Handhebelträgers den Randbereich der zugeordneten rechteckigen Öffnung, und der jeweilige federelastische Vorsprung ragt in die ihm zugeordnete Öffnung. Ferner ist an den Einsteckelementen jeweils eine Noppe ausgebildet, die im montierten Zustand des Handhebelträgers federelastisch gegen die Unterseite des zugeordneten Fußbügels drückt.

Der vorliegenden Erfindung liegt die Aufgabe zugrunde, den Montageaufwand bei der Befestigung eines Fahrzeug-Türschlosses an einem in eine Kraftfahrzeugtür einsetzbaren Aggregateträger (Türmodulträger) zu optimieren.

Diese Aufgabe wird durch einen Aggregateträger mit den Merkmalen des Anspruchs 1 gelöst. Der für eine Kraftfahrzeugtür bestimmte Aggregateträger ist mit mindestens einem Befestigungsabschnitt für ein Türschloss und Befestigungsstellen zur Befestigung des Aggregateträgers an einer Kraftfahrzeugtür versehen, wobei das Türschloss über einen Schlosshaltewinkel mit dem Aggregateträger verbindbar ist. Weiter ist der erfindungsgemäße Aggregateträger **dadurch gekennzeichnet, dass** zwischen dem Schlosshaltewinkel und dem Aggregateträger eine als lösbare Clipsverbindung ausgebildete Rastverbindung vorgesehen ist, so dass der Schlosshaltewinkel durch Verrastung an dem Aggregateträger befestigbar ist, wobei die Rastverbindung durch mehrere Einstecköffnungen und mindestens ein an dem Schlosshaltewinkel ausgebildetes, verrastbares Steckelement gebildet ist, und wobei die Einstecköffnungen in an dem Aggregateträger angeformten Rippen enthalten sind, die in der Einsteckrichtung des Steckelements voneinander beabstandet sind.

Der Schlosshaltewinkel ist somit durch eine einfache Verrastung an dem Aggregateträger zur Vormontage des Türschlosses befestigbar, wodurch eine erhebliche Zeitersparnis bei der Vormontage des Türschlosses erreicht wird und auf zusätzliche Befestigungsmittel wie Nieten oder Schrauben zur Befestigung von Türschloss und Schlosshaltewinkel am Aggregateträger vollständig verzichtet werden kann. Durch die Ausbildung der Rastverbindung als lösbare Clipsverbindung kann die Verbindung zwischen Schlosshaltewinkel und dem Aggregateträger bei Bedarf, insbesondere im Reparaturfall zerstörungsfrei gelöst werden. Die voneinander beanstandete Rippen umfassende Konfiguration ermöglicht bei relativ geringem Materialverbrauch in der Herstellung der Verbindungselemente der Rastverbindung eine sehr robuste Befestigung des Schlosshaltewinkels am Aggregateträger.

Der Schlosshaltewinkel kann mit dem Türschloss fest verbunden sein. Nach einer vorteilhaften Ausgestaltung der Erfindung ist insbesondere vorgesehen, dass der Schlosshaltewinkel einstückig mit einem Gehäuse des Türschlosses ausgebildet ist. Hierdurch lässt sich die erforderliche Montagezeit weiter verkürzen und die Teileanzahl verringern.

Eine andere vorteilhafte Ausgestaltung der erfindungsgemäßen Lösung ist **dadurch gekennzeichnet, dass** der Schlosshaltewinkel einstückig mit einer mit dem Türschloss verbindbaren, insbesondere verrastbaren Abdeckung ausgebildet ist. Auch diese Ausgestaltung ermöglicht eine weitere Verkürzung der Montagezeit und reduziert die Anzahl der zu montierenden Teile.

Vorzugsweise besteht der Aggregateträger weitestgehend aus im Spritz-Schäumverfahren hergestelltem Kunststoff. Ein derartiger Aggregateträger zeichnet sich durch ein relativ geringes Gewicht bei ausreichend hoher Festigkeit sowie Tragfähigkeit aus. Ein leichter Aggregateträger erleichtert die Montage und verringert das Gesamtgewicht und damit den Kraftstoffverbrauch des Kraftfahrzeuges. Zudem wirkt der Aggregateträger aufgrund des spritzgeschäumten Kunststoffs schallisolierend, wobei die Schallisolation wesentlich besser ist als bei einem entsprechenden Aggregateträger, der insgesamt oder weitestgehend aus Metallblech gefertigt ist.

Es liegt allerdings auch im Rahmen der Erfindung, den Aggregateträger aus Kunststoff im Spritzguß-, Spritzpräge- oder Prägeverfahren herzustellen.

Eine besonders robuste Verbindung von Schlosshaltewinkel und Aggregateträger wird insbesondere dann erreicht, wenn nach einer bevorzugten Ausgestaltung der Erfindung die Rastverbindung durch mehrere an dem Schlosshaltewinkel ausgebildete, in den Einstecköffnungen verrastbare Steckelemente gebildet ist.

Die lösbare Clipsverbindung ist vorzugsweise in der Weise realisiert, dass an dem Steckelement mindestens ein federelastisch auslenkbarer Rastvorsprung ausgebildet ist.

Das Steckelement ist dabei vorzugsweise stegförmig ausgebildet, wobei der Rastvorsprung eine in Einsteckrichtung geneigte, schräg zur stegförmigen Außenfläche des Steckelements verlaufende Druckfläche aufweist sowie eine im wesentlichen senkrecht zur stegförmigen Außenfläche des Steckelements verlaufende Anschlagfläche. Diese Konfiguration gewährleistet eine leichtgängige Rastverbindung, die grundsätzlich nur dadurch gelöst werden kann, dass der Rastvorsprung mittels einer Druckkraft gegen seine Federkraft ausgelenkt wird.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine perspektivische Ansicht auf einen Abschnitt eines Aggregateträgers für den Einbau in eine Kraftfahrzeugtür, an dem ein Türschloss mittels eines Schlosshaltewinkels befestigt ist;
- Fig. 2: eine Draufsicht auf einen Abschnitt eines Aggregateträgers gemäß Fig. 1 im Bereich eines daran befestigten Schlosshaltewinkels;
- Fig. 3: eine Schnittansicht entlang der Schnittlinie A-A in Fig. 2;
- Fig. 4: eine Draufsicht auf einen Abschnitt des Aggregateträgers gemäß Fig. 1 im Bereich eines daran befestigten, jedoch gegenüber Fig. 2 abweichenden Schlosshaltewinkels;
- Fig. 5: eine Schnittansicht entlang der Schnittlinie B-B in Fig. 4;
- Fig. 6: eine Draufsicht auf einen Abschnitt eines Aggregateträgers im Bereich eines daran befestigten Schlosshaltewinkels gemäß einem weiteren Ausführungsbeispiel; und
- Fig. 7: eine Schnittansicht entlang der Schnittlinie C-C in Fig. 6.

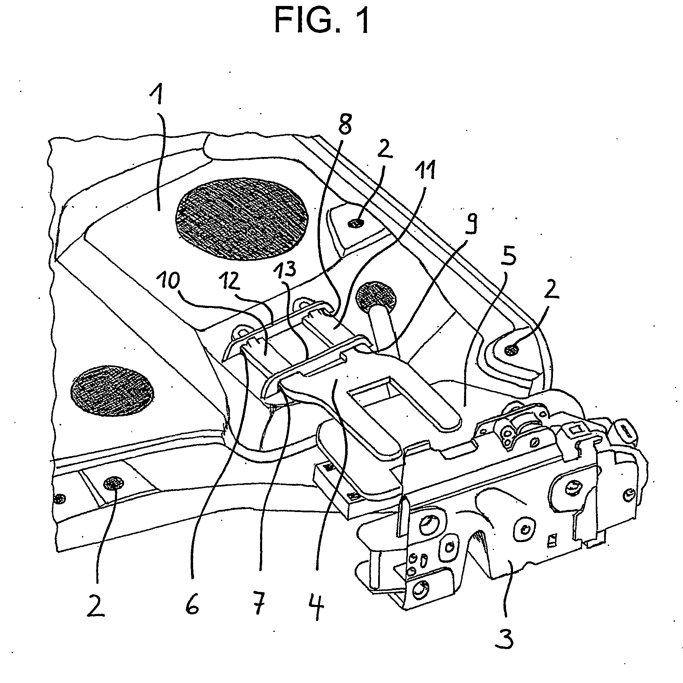

In Fig. 1 ist ein Abschnitt eines Aggregateträgers 1 einer Kraftfahrzeugtür (nicht gezeigt) dargestellt. Mit 2 sind Befestigungsstellen bezeichnet, an denen der Aggregateträger 1 mittels Clipverbindern oder Schrauben an einer Kraftfahrzeugtür lösbar befestigt werden kann. Der Aggregateträger 1 besteht im wesentlichen aus Kunststoff, vorzugsweise aus im Spritz-Schäumverfahren hergestelltem Kunststoff, und dient der Halterung verschiedener Funktionskomponenten der Kraftfahrzeugtür, und zwar insbesondere der Halterung eines Türschlosses 3. Darüber hinaus sind an dem Aggregateträger 1 weitere (nicht gezeigte) Funktionskomponenten, beispielsweise ein Fensterheber, ein Airbag, ein Energieabsorptionselement zum Schutz eines Fahrzeuginsassen und/oder ein Lautsprecher montiert.

Das Türschloss 3 ist über einen Schlosshaltewinkel 4 mit dem Aggregateträger 1 verbunden, wobei zwischen dem Schlosshaltewinkel 4 und dem Aggregateträger 1 eine Rastverbindung vorgesehen ist, so dass der Schlosshaltewinkel 4 durch Verrastung an dem Aggregateträger 1 befestigbar ist. Die Rastverbindung zwischen Schlosshaltewinkel 4 und Aggregateträger 1 ist als lösbare Clipsverbindung ausgebildet. Sie umfasst mindestens ein am Schlosshaltewinkel 4 ausgebildetes Rastelement und eine am Aggregateträger 1 ausgebildete, auf das Rastelement ausgerichtete Rastaufnahme.

Das andere Ende des Schlosshaltewinkels 4 ist mit einem Gehäuseteil bzw. einer Abdeckung 5 des Türschlosses 3 verbunden, wobei der Schlosshaltewinkel und das Gehäuseteil bzw. der Schlosshaltewinkel und die Abdeckung 5 vorzugsweise auch einstückig ausgebildet sein können. Der Schlosshaltewinkel 4 und die Abdeckung 5 sind aus Kunststoff hergestellt. Die Abdeckung 5 schützt das Türschloss 3 vor Nässe und/oder Manipulation.

Wie in Fig. 1 gezeigt ist, weist die Rastverbindung im Aggregateträger 1 ausgebildete Einstecköffnungen 6, 7, 8, 9 als Rastaufnahme und zwei an dem Schlosshaltewinkel 4 ausgebildete, in den Einstecköffnungen verrastbare Steckelemente 10, 11 auf. Die Einstecköffnungen 6, 7, 8, 9 sind in voneinander beabstandeten Rippen 12, 13 ausgebildet, die einstückig am Aggregateträger 1 angeformt sind.

Der Schlosshaltewinkel 4 ist gabelförmig ausgebildet, wobei die beiden Steckelemente 10, 11 das gabelförmige Einsteckende des Schlosshaltewinkels bilden.

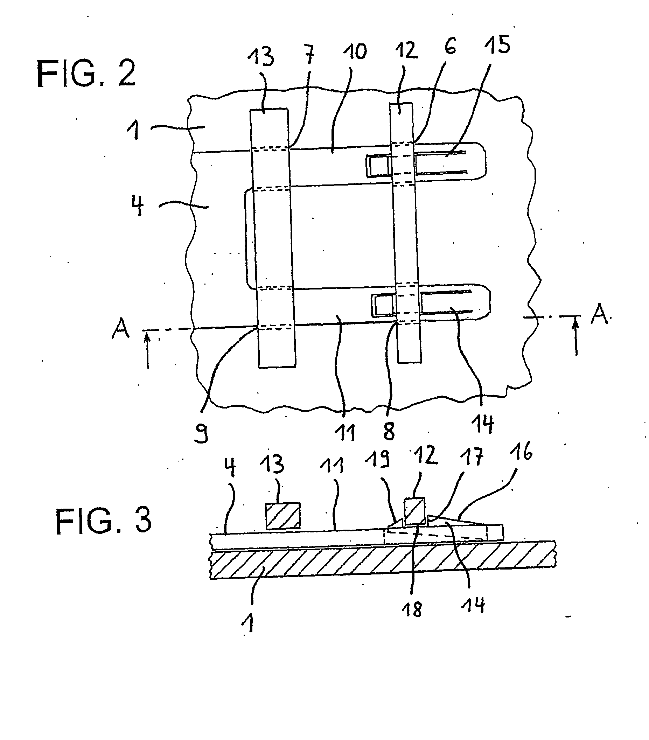

Wie in den Figuren 2 und 3 zu erkennen ist, weisen die Steckelemente 10, 11 jeweils einen federelastisch auslenkbaren Rastvorsprung 14, 15 als Rastelement auf. Um das Einführen der Steckelemente 10, 11 in die Einstecköffnungen 6, 7, 8, 9 zu erleichtern, weisen ihre vorderen Enden jeweils eine Verjüngung auf. Die Steckelemente 10, 11 sind im wesentlichen stegförmig ausgebildet, wobei der federelastisch auslenkbare Rastvorsprung 14 bzw. 15 eine in Einsteckrichtung geneigte, schräg zur stegförmigen Außenfläche des Steckelements verlaufende Druckfläche 16 und eine im wesentlichen senkrecht zur stegförmigen Außenfläche des Steckelements verlaufende Anschlagfläche 17 aufweist. Der in dem Steckelement 10, 11 durch einen im wesentlichen U-förmigen Schlitz definierte Rastvorsprung 14, 15 ist ebenfalls stegförmig ausgebildet und weist an seinem dem vorderen Ende des Steckelements 10, 11 abgewandten Ende eine quer zur Einsteckrichtung verlaufende Nut 18 auf. Die Rippen 12, 13 sind unterschiedlich breit ausgebildet, so dass die Nut 18 des Rastvorsprungs 14 bzw. 15 mit der breiteren Rippe 13 nicht verrastet. Das dem vorderen Ende des Steckelements 10, 11 abgewandte Ende des Rastvorsprungs ist abgeschrägt, wobei die Oberseite 19 entgegen der Einsteckrichtung der Steckelement 10, 11 geneigt ist, so dass der Rastvorsprung 14 bzw. 15 beim Herausziehen der Steckelemente 10, 11 aus der Rastaufnahme an der breiteren Rippe 13 jeweils nach unten gedrückt wird.

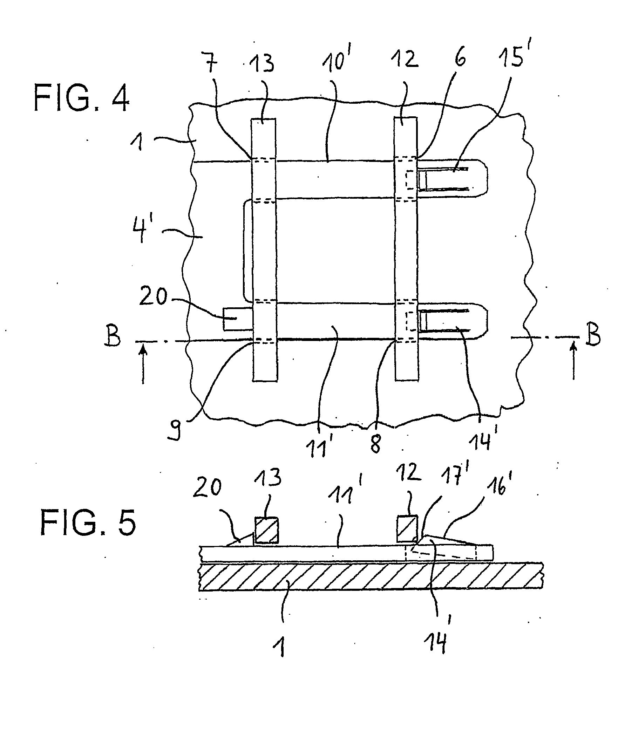

Die Figuren 4 und 5 zeigen eine Variante des Schlosshaltewinkels 4'. Bei dieser Ausgestaltung weist der Rastvorsprung 14', 15' wiederum eine in Einsteckrichtung geneigte, schräg zur stegförmigen Außenfläche des Steckelements 10', 11' verlaufende Druckfläche 16' auf. Die Anschlagfläche 17' ist hier jedoch ebenfalls schräg zur stegförmigen Außenfläche des Steckelements 10' bzw. 11' ausgebildet, wobei die Anschlagfläche 17' eine stärkere Neigung gegenüber der stegförmigen Außenfläche des Steckelements aufweist als die Druckfläche und entgegengesetzt zur Einsteckrichtung geneigt ist.

Durch die schräg zur stegförmigen Außenfläche des Steckelements verlaufende Anschlagfläche 17' ist der Schlosshaltewinkel 4' in seiner eingerasteten Stellung ausreichend fest gegen eine die Verbindung mit dem Aggregateträger 1 lösende Bewegung gesichert. Bei dieser Ausgestaltung ist es zum Lösen der Rastverbindung nicht erforderlich, dass der Rastvorsprung 14' bzw. 15' mittels einer Druckkraft gegen seine Federkraft niedergedrückt wird. Denn die Rastverbindung kann in diesem Fall auch dadurch gelöst werden, dass das Steckelement bzw. die Steckelemente 10', 11' des Schlosshaltewinkels 4' mit einer bestimmten Zugkraft aus den ihnen zugeordneten Einstecköffnungen 6, 7, 8, 9 herausgezogen werden, wobei die schräg verlaufende Anschlagfläche 17' so geneigt ist, dass die Zugkraft durch eine Person ohne Werkzeug oder andere Hilfsmittel aufgebracht werden kann.

Um die Einstecktiefe des Schlosshaltewinkels 4' zu begrenzen, ist mindestens eines der Steckelemente 10', 11' mit einem mit der Rippe 13 zusammenwirkenden Anschlag 20 versehen.

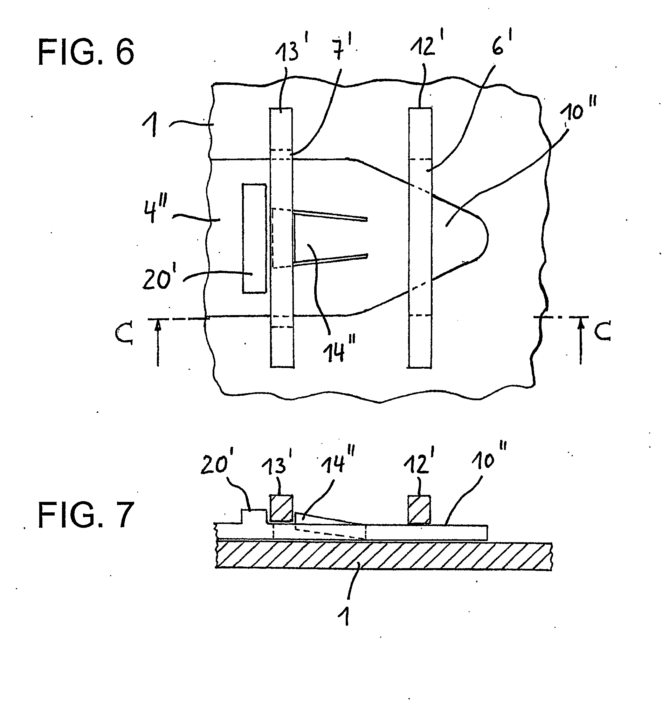

In den Figuren 6 und 7 ist ein weiteres Ausführungsbeispiel der erfindungsgemäßen Türschlossbefestigung gezeigt, bei dem der Schlosshaltewinkel 4" nur ein einzelnes Steckelement bzw. Einsteckende 10'' aufweist. Das Steckelement 10'' ist hier also nicht gabelförmig ausgebildet, wie es bei den in den Figuren 1 bis 5 gezeigten Ausführungsbeispielen der Fall ist. Das Steckelement (= Einsteckende) 10'' des Schlosshaltewinkels 4" weist ein verjüngtes Einführende auf, das in die in den Rippen 12' und 13' ausgebildeten Einstecköffnungen 6' und 7' des Aggregateträgers 1 einsteckbar ist. Das Einsteckende 10'' besitzt als Rastelement einen federelastisch auslenkbaren Rastvorsprung 14'', der mit der Rippe 13' zusammenwirkt.

Um die Einstecktiefe des Schlosshaltewinkels 4'' zu begrenzen, ist an dem Einsteckende des Schlosshaltewinkels wiederum, wie bei dem Ausführungsbeispiel gemäß den Figuren 4 und 5, ein mit der Rippe 13' zusammenwirkender Anschlag 20' vorhanden.

Die Erfindung ist in ihrer Ausführung nicht auf die vorstehend beschriebenen Ausführungsbeispiele beschränkt. Vielmehr sind eine Reihe weiterer Varianten denkbar, die auch bei grundsätzlich abweichender Gestaltung von dem in den Ansprüchen enthaltenen Erfindungsgedanken Gebrauch machen. So kann die erfindungsgemäße Rast- bzw. Clipsverbindung beispielsweise auch in der Weise ausgeführt werden, dass bei einer gabelförmigen Gestaltung des Schlosshaltewinkels 4, 4' nur eines der Steckelemente 10, 11 bzw. 10', 11' mit einem federelastisch auslenkbaren Rastvorsprung 14 bzw. 14' gemäß Fig. 3 oder Fig. 5 versehen ist.

## Patentansprüche

1. Aggregateträger (1) für eine Kraftfahrzeugtür, mit mindestens einem Befestigungsabschnitt für ein Türschloss (3) und Befestigungsstellen zur Befestigung des Aggregateträgers an einer Kraftfahrzeugtür, wobei das Türschloss über einen Schlosshaltewinkel (4, 4', 4'') mit dem Aggregateträger verbindbar ist,
**dadurch gekennzeichnet, dass** zwischen dem Schlosshaltewinkel (4, 4', 4") und dem Aggregateträger (1) eine als lösbare Clipsverbindung ausgebildete Rastverbindung vorgesehen ist, so dass der Schlosshaltewinkel (4, 4', 4'') durch Verrastung an dem Aggregateträger (1) befestigbar ist, wobei die Rastverbindung durch mehrere Einstecköffnungen (6, 7, 8, 9; 6', 7') und mindestens ein an dem Schlosshaltewinkel ausgebildetes, in den Einstecköffnungen verrastbares Steckelement (10, 11; 10', 11'; 10'') gebildet ist, und wobei die Einstecköffnungen (6, 7, 8, 9; 6', 7') in an dem Aggregateträger angeformten Rippen (12, 13; 12', 13') enthalten sind, die in der Einsteckrichtung des Steckelements voneinander beabstandet sind.

2. Aggregateträger nach Anspruch 1,
**dadurch gekennzeichnet, dass** die Rastverbindung durch mehrere an dem Schlosshaltewinkel (4, 4') ausgebildete, in den Einstecköffnungen verrastbare Steckelemente (10, 11; 10', 11') gebildet ist.

3. Aggregateträger nach Anspruch 2,
**dadurch gekennzeichnet, dass** der Schlosshaltewinkel (4, 4') gabelförmig ausgebildet ist, wobei ein gabelförmiges Ende des Schlosshaltewinkels durch die Steckelemente (10, 11; 10', 11') gebildet ist.

4. Aggregateträger nach.Anspruch 1,
**dadurch gekennzeichnet, dass** an dem mindestens einen Steckelement (10, 11; 10', 11'; 10'') mindestens ein federelastisch auslenkbarer Rastvorsprung (14, 15; 14', 15'; 14'') ausgebildet ist.

5. Aggregateträger nach Anspruch 4,
**dadurch gekennzeichnet, dass** das Steckelement (10, 11) stegförmig ausgebildet ist, wobei der Rastvorsprung (14, 15) eine in Einsteckrichtung geneigte, schräg zur stegförmigen Außenfläche des Steckelements (10, 11) verlaufende Druckfläche (16) und eine im wesentlichen senkrecht zur stegförmigen Außenfläche des Steckelements verlaufende Anschlagfläche (17) aufweist.

6. Aggregateträger nach Anspruch 4,
**dadurch gekennzeichnet, dass** das Steckelement (10', 11') stegförmig ausgebildet ist, wobei der Rastvorsprung (14') eine in Einsteckrichtung geneigte, schräg zur stegförmigen Außenfläche des Steckelements verlaufende Druckfläche (16') und eine schräg zur stegförmigen Außenfläche des Steckelements verlaufende Anschlagfläche (17') aufweist, wobei die Anschlagfläche (17') eine stärkere Neigung gegenüber der stegförmigen Außenfläche des Steckelements aufweist als die Druckfläche (16') und entgegengesetzt zur Einsteckrichtung geneigt ist.

7. Aggregateträger nach einem der Ansprüche 1 bis 6,
**dadurch gekennzeichnet, dass** der Schlosshaltewinkel (4, 4') mit dem Türschloss (3) fest verbunden ist.

8. Aggregateträger nach einem der Ansprüche 1 bis 7,
**dadurch gekennzeichnet, dass** der Schlosshaltewinkel (4, 4', 4'') einstückig mit einer mit dem Türschloss (3) verbindbaren, insbesondere verrastbaren Abdeckung (5) ausgebildet ist.

9. Aggregateträger nach einem der Ansprüche 1 bis 7,
**dadurch gekennzeichnet, dass** der Schlosshaltewinkel (4, 4', 4'') einstückig mit einem Gehäuse des Türschlosses (3) ausgebildet ist.

10. Aggregateträger nach einem der Ansprüche 1 bis 9,
**dadurch gekennzeichnet, dass** er zumindest teilweise aus im Spritz-Schäumverfahren hergestelltem Kunststoff besteht.

## Claims

1. A unit carrier (1) for a motor vehicle door with at least one fastening section for a door lock (3) and fixing points for securing the unit carrier to a motor vehicle door, wherein the door lock can be connected to the unit carrier by means of a lock holding angle (4, 4', 4"), **characterised in that** a snap-in connection designed as a detachable clip connection is provided between the lock holding angle (4, 4', 4") and the unit carrier (1) so that the lock holding angle (4, 4', 4") can be secured to the unit carrier (1) by means of a catch mechanism, wherein the snap-in connection is formed by several insert openings (6, 7, 8, 9; 6', 7') and at least one plug-in element (1, 11; 10', 11'; 10'') that is formed on the lock holding angle (4, 4', 4'') and can be locked in the insert openings, and wherein the insert openings (6, 7, 8, 9; 6', 7') are contained in ribs (12, 13; 12', 13') which are formed on the unit carrier and are spaced apart form each other in the plug-in direction of the plug-in element.

2. The unit carrier according to Claim 1, **characterised in that** the snap-in connection is formed by several plug-in elements (1, 11; 10', 11') that are formed on the lock holding angle (4, 4') and can be locked in the insert openings.

3. The unit carrier according to Claim 2, **characterised in that** the lock holding angle (4, 4') is of fork-shaped design, wherein a fork-shaped end of the lock holding angle is formed by the plug-in elements (10, 11; 10', 11').

4. The unit carrier according to Claim 1, **characterised in that** at least one snap-in projection (14, 15; 14', 15'; 14") that can be deflected by spring elasticity is formed on the at least one plug-in element (10, 11; 10', 11', 10").

5. The unit carrier according to Claim 4, **characterised in that** the plug-in element (10, 11) is of a catwalk-shaped design, wherein the snap-in projection (14, 15) has a pressure face (16) that is inclined in the direction of insertion and runs obliquely to the catwalk-shaped outer surface of the plug-in element (10, 11), and a stop surface (17) that runs essentially perpendicularly to the catwalk-shaped outer surface of the plug-in element.

6. The unit carrier according to Claim 4, **characterised in that** the plug-in element (10', 11') is of a catwalk-shaped design, wherein the snap-in projection (14') has a pressure face (16') that is inclined in the direction of insertion and runs obliquely to the catwalk-shaped outer surface of the plug-in element, and a stop face (17') that runs obliquely to the catwalk-shaped outer surface of the plug-in element, wherein the stop face (17') has a greater inclination to the catwalk-shaped outer surface of the plug-in element than the pressure face (16') and is inclined so that it is opposed to the direction of insertion.

7. The unit carrier according to any one of Claims 1 to 6, **characterised in that** the lock holding angle (4, 4') is rigidly connected to the door lock (3).

8. The unit carrier according to any one of Claims 1 to 7, **characterised in that** the lock holding angle (4, 4', 4'') is designed integrally with a cover (5) that can be connected to, in particular locked to the door lock (3).

9. The unit carrier according to any one of Claims 1 to 7, **characterised in that** the lock holding angle (4, 4', 4'') is designed integrally with a housing of the door lock (3).

10. The unit carrier according to any one of Claims 1 to 9, **characterised in that** it consists at least partially of plastic manufactured in the injection moulding-foaming process.

## Revendications

1. Support d'unité (1) pour une portière de véhicule automobile, avec au moins une section de fixation pour une serrure de portière (3) et des points de fixation pour la fixation du support d'unité à une portière de véhicule automobile, la serrure de portière pouvant être reliée au support d'unité au moyen d'une cornière de maintien de serrure (4, 4', 4"), **caractérisé en ce que**, entre la cornière de maintien de serrure (4, 4', 4") et le support d'unité (1), est prévue une liaison par encliquetage, réalisée en tant que liaison amovible par clipsage, de sorte que la cornière de maintien (4, 4', 4'') de la serrure puisse être fixée par enclenchement au support d'unité (1), le système d'enclenchement étant composé par plusieurs ouvertures d'insertion (6, 7, 8, 9; 6', 7') et au moins un élément insérable (10, 11; 10', 11'; 10"), qui est formé sur la cornière de maintien de serrure, pouvant être introduit dans les ouvertures d'insertion, et les ouvertures d'insertion (6, 7, 8, 9 ; 6', 7') étant comprises dans des nervures (12, 13; 12', 13') formées sur le support d'unité, lesquelles sont disposées à distance les unes des autres, dans la direction d'insertion de l'élément insérable.

2. Support d'unité selon la revendication 1, **caractérisé en ce que** la liaison par enclenchement est formée par plusieurs éléments insérables (10, 11; 10', 11'), formés sur la cornière de maintien de serrure (4, 4'), qui peuvent être enclenchés dans les ouvertures d'insertion.

3. Support d'unité selon la revendication 2, **caractérisé en ce que** la cornière de maintien de serrure (4, 4') est conçue en forme de fourche, une extrémité fourchue de la cornière de maintien de serrure étant formée par les éléments insérables (10, 11; 10', 11').

4. Support d'unité selon la revendication 1, **caractérisé en ce que,** sur l'élément insérable (10, 11; 10', 11'; 10'') au moins prévu, est formé au moins un nez d'arrêt (14, 15; 14', 15'; 14'') pouvant dévier élastiquement.

5. Support d'unité selon la revendication 4, **caractérisé en ce que** l'élément insérable (10, 11) est conçu en forme de patte, le nez d'arrêt (14, 15) présentant une surface de pression (16) inclinée dans la direction d'insertion, qui s'étend en biais vers la surface extérieure en forme de patte de l'élément insérable (10, 11), et une surface de butée (17) s'étendant sensiblement perpendiculairement à la surface extérieure en forme de patte de l'élément insérable.

6. Support d'unité selon la revendication 4, **caractérisé en ce que** l'élément insérable (10', 11') est conçu en forme de patte, le nez d'arrêt (14') présentant une surface de pression (16') inclinée dans la direction d'insertion, qui s'étend en biais vers la surface extérieure en forme de patte de l'élément insérable, et une surface de butée (17') s'étendant en pente vers la surface extérieure en forme de patte de l'élément insérable, la surface de butée (17') présentant une pente vers la surface extérieure en forme de patte de l'élément insérable plus forte que celle de la surface de pression (16'), et étant inclinée à l'opposé de la direction d'insertion.

7. Support d'unité l'une des revendications 1 à 6, **caractérisée en ce que** la cornière de maintien de serrure (4, 4') est reliée fixement à la serrure (3) de la portière.

8. Support d'unité l'une des revendications 1 à 7, **caractérisé en ce que** la cornière de maintien de serrure (4, 4', 4") est formée d'une pièce avec une pièce de recouvrement (5) pouvant être reliée, en particulier par enclenchement, à la serrure (3) de la portière.

9. Support d'unité selon l'une des revendications 1 à 7, **caractérisé en ce que** la cornière de maintien de serrure (4, 4', 4'') est formée d'une pièce avec un boîtier de la serrure (3) de la portière.

10. Support d'unité selon l'une des revendications 1 à 9, **caractérisé en ce qu'**il consiste au moins partiellement en matière synthétique fabriquée selon le procédé d'injection de mousse.
